# FASCICULE DE BREVET EUROPEEN

(11) **EP 2 884 227 B1**
(45) Date de publication et mention de la délivrance du brevet: **15.08.2018**
(21) Numéro de dépôt: 14197475.8
(22) Date de dépôt: 11.12.2014
(51) Int. Cl.: G01B 11/24

(54) **Dispositif de contrôle dimensionnel et/ou du positionnement d'une pièce**
Vorrichtung zum Kontrollieren der Abmessungen und/oder der Positionierung eines Bauteils
Device for controlling the dimensions and/or position of a part

(30) Priorité: 11.12.2013 FR 1362404
(43) Date de publication de la demande: 17.06.2015
(73) Titulaire: 2MI "Modeles et Moules Pour l'Industrie", 03310 Lavault Saint Anne (FR)
(72) Inventeur: Locheron, David, 03310 SAINT GENEST (FR)
(74) Mandataire: Lavoix

(56) Documents cités:
- WO-A2-02/16865
- FR-A1- 2 926 632
- JP-A- H05 272 937
- JP-A- 2006 145 326
- JP-A- 2009 276 249
- JP-A- 2010 117 182
- JP-A- 2010 169 450
- US-A- 4 188 544

## Description

La présente invention concerne un dispositif de contrôle dimensionnel et/ou du positionnement d'une pièce.

Par pièce, il faut entendre un élément d'une machine, d'un produit, d'un véhicule ou un assemblage de plusieurs de ces éléments. Ces pièces sont de formes variées, présentent des surfaces lisses ou non, peuvent être réalisées en différents matériaux et sont obtenues par diverses techniques, connues en soi, par exemple par usinage ou par moulage.

Lors de la réalisation d'une telle pièce, il est courant de vérifier qu'elle est conforme à son cahier des charges, en particulier que les écarts dimensionnels entre la pièce réalisée et une pièce théorique sont dans des tolérances acceptables. Ainsi, avant de lancer la fabrication d'une série de plusieurs pièces, on effectue un contrôle dimensionnel sur certaines pièces, prises au hasard, afin d'optimiser les réglages de la ligne de fabrication. Compte tenu de la complexité de certaines pièces, plusieurs dimensions, telles que, par exemple, l'épaisseur, la longueur, la largeur, etc., doivent être contrôlées : le nombre de dimensions à contrôler dépend de la complexité des pièces et/ou des tolérances acceptées.

Le contrôle de ces dimensions doit être réalisé le plus précisément et le plus rapidement possible, idéalement sans altérer la pièce. En effet, si la pièce contrôlée est conforme, il est préférable que celle-ci ne soit pas détruite pour pouvoir réintégrer la ligne de fabrication.

Pour réaliser un tel contrôle dimensionnel, il est connu d'utiliser des palpeurs ou comparateurs à contact. Ceux-ci sont étalonnés par rapport à une dimension prédéterminée pour une zone, ponctuelle ou quasi-ponctuelle, de la pièce, qui est à contrôler. Pour mettre en oeuvre le contrôle, il est nécessaire de positionner précisément le comparateur à l'endroit souhaité, cette mise en place étant généralement effectuée manuellement. De plus, la partie du comparateur en appui sur la pièce peut, selon la force d'appui, qui est souvent réglée manuellement, faire varier la mesure et fournir une valeur plus ou moins erronée. Cet inconvénient est particulièrement marqué lorsque la pièce à contrôler présente une certaine souplesse. Dans certains cas, lorsque les pièces sont relativement fragiles, un appui excessif du comparateur peut endommager, par exemple rayer, la pièce.

Les différentes valeurs obtenues sont ensuite comparées avec des valeurs préétablies, afin de calculer l'écart par rapport aux dimensions prédéfinies de la pièce théorique et donc d'apprécier la conformité de la pièce contrôlée à son cahier des charges. L'utilisateur peut ainsi décider de la suite à donner : par exemple, l'utilisateur peut décider de réusiner la pièce ou de la reprendre d'une autre façon, tout en modifiant les réglages de la ligne de fabrication. Dans tous les cas, on comprend que les opérations de contrôle d'une pièce sont relativement longues et limitées par l'utilisation de ces comparateurs à contact.

On remarquera que les considérations qui précèdent s'appliquent également dans le cas où, plutôt que de contrôler la conformité dimensionnelle d'une pièce, on cherche à contrôler la conformité du positionnement d'une telle pièce, par exemple en vue de sa saisie par un robot ou encore de l'application à cette pièce d'un traitement nécessitant son positionnement précis.

Dans ce contexte, le demandeur a proposé, dans FR 2 926 632, sur lequel le préambule de la revendication 1 annexée est basé, un procédé et un dispositif de contrôle sans contact, reposant sur l'utilisation d'un détecteur optique émettant un unique faisceau laser. Afin de disposer de données positionnelles du point de la pièce intersecté par le faisceau émis par ce détecteur optique, plus précisément de données représentatives de la position de ce point par rapport à un support de maintien fixe de la pièce à contrôler, il est nécessaire d'étalonner le détecteur optique, en plaçant une mire d'étalonnage sur le trajet du faisceau laser de manière à acquérir des données positionnelles d'étalonnage. Ainsi, le procédé et le dispositif de FR 2 926 632 présentent un réel intérêt, du fait que la pièce à contrôler n'interfère plus avec un comparateur à contact, tout en nécessitant la mise en oeuvre de manipulations spécifiques.

L'approche technique de FR-A-2 926 632, qui est d'ailleurs celle en partie mise en oeuvre par la présente invention, selon laquelle le temps mis par le faisceau laser pour aller et revenir au détecteur optique est mesuré pour calculer la distance entre le détecteur et un obstacle, ne doit pas être confondue avec les solutions proposées dans WO-A-02/16865, US-A-4 188 544, JP-A-H05 272937, JP-A-2009 276249, JP-A-2010 117182, JP-A-2006 145326 et JP-A-2010 169450, selon lesquelles une source de lumière, qui peut être un laser, cible les points à mesurer, tandis que la position de ces points est obtenue à l'aide d'une caméra ou d'un capteur optique, distinct de la source de lumière.

Le but de la présente invention est de proposer un dispositif de contrôle amélioré, qui, tout en étant aussi fiable que les dispositifs connus, soit plus performant, ainsi que plus rapide et plus facile à utiliser.

A cet effet, l'invention a pour objet un dispositif de contrôle dimensionnel et/ou du positionnement d'une pièce, tel que défini à la revendication 1.

Une des idées à la base de l'invention est d'utiliser un capteur laser multi-faisceaux pour faciliter, fiabiliser et rendre plus performant la mise en oeuvre du contrôle dimensionnel et/ou du positionnement d'une pièce. Selon l'invention, les faisceaux lumineux émis distinctement par ce capteur laser multi-faisceaux intersectent une surface à contrôler de la pièce en autant de points de contrôle : comme les faisceaux lumineux sont émis dans un même plan géométrique, les points de contrôle sont coplanaires, en se répartissant de manière sensiblement régulière le long du profil de la pièce, formé à l'intersection entre la surface à contrôler de cette pièce et le plan géométrique dans lequel sont émis les faisceaux laser. Un des intérêts majeurs de l'invention est ainsi de pouvoir relever ce profil à partir des points de contrôle, tout en permettant de connaître facilement leur position par rapport à un support de repérage spatial, de mise en position et de maintien en position fixe de la pièce à contrôler : en pratique, plusieurs possibilités sont envisageables pour déterminer la position de ces points de contrôle par rapport au support, étant remarqué que, avantageusement, il suffit que la position d'un ou de quelques uns des points de contrôle soit déterminée pour déduire celle de tous les autres points de contrôle, par comparaison entre les points de contrôle dont la position par rapport au support est déjà connue et ceux dont la position reste à déterminer. On notera que la détermination de la position du ou des premiers points de contrôle peut d'ailleurs être obtenue par la mise en oeuvre du procédé décrit dans FR 2 926 632. Une autre approche, particulièrement avantageuse, consiste à utiliser certains des faisceaux émis par le capteur laser multi-faisceaux pour intersecter, en des points d'étalonnage, une surface d'étalonnage qui est solidaire du support et dont la position par rapport à ce support est prédéterminée : à partir des informations relatives au positionnement des points d'étalonnage, on peut déduire la position des points de contrôle par rapport au support.

En multipliant les points de contrôle le long du profil précité de la pièce à contrôler, on facilite le contrôle, dans le sens où, comparativement à l'utilisation d'un détecteur à faisceau laser unique qui risque de pointer « à côté » de la zone de la pièce que l'on cherche à contrôler, la mise en place du capteur laser multi-faisceaux est moins contraignante, du moment que le plan géométrique dans lequel sont émis les faisceaux intersecte la surface de la pièce que l'on cherche à contrôler. De plus, la multiplication des points de contrôle le long du profil précité de la pièce décuple la performance du contrôle de cette pièce : en effet, il devient alors possible de traiter les données représentatives de la position de ces points de contrôle par rapport au support, afin de mettre à disposition de l'utilisateur diverses informations de contrôle. Par exemple, en comparant entre elles ces données, on peut identifier un maximum et/ou un minimum, c'est-à-dire le point de contrôle le plus proche et/ou le plus éloigné du capteur laser multi-faisceaux, et ce en considérant soit la totalité des points de contrôle, soit seulement une partie, correspondant à une portion du profil de la pièce, qui intéresse plus spécialement l'utilisateur. A titre d'autres exemples du traitement aval possible des données représentatives de la position des points de contrôle, on peut citer la reconstruction, typiquement par extrapolation, d'un profil continu de la pièce à contrôler, dans le plan géométrique dans lequel sont émis les faisceaux lumineux du capteur laser multi-faisceaux. Par ailleurs, toujours dans une optique d'optimisation du contrôle de la pièce, ce contrôle peut n'être que sélectif, en ne portant que sur une portion seulement du profil de la pièce à contrôler, intersecté par la totalité des faisceaux émis par le capteur laser multi-faisceaux : autrement dit, seule une partie des points de contrôle, résultant de l'intersection entre la totalité des faisceaux lumineux et la surface à contrôler de la pièce, est exploitée pour calculer l'écart dimensionnel et/ou du positionnement entre la surface à contrôler et une surface théorique prédéfinie.

Des caractéristiques additionnelles avantageuses du dispositif de contrôle conforme à l'invention, sont spécifiées aux revendications 2 à 9.

L'invention sera mieux comprise à la lecture de la description qui va suivre, donnée uniquement à titre d'exemple et faite en se référant aux dessins sur lesquels :
- la figure 1 est une vue en perspective d'un dispositif de contrôle conforme à l'invention ;
- la figure 2 est une vue en perspective, montrant, à plus grande échelle, une partie seulement du dispositif de la figure 1 ;
- la figure 3 est une section schématique, considérée dans le plan III de la figure 2 ; et
- la figure 4 est une vue à plus grande échelle de la partie cerclée IV à la figure 3.

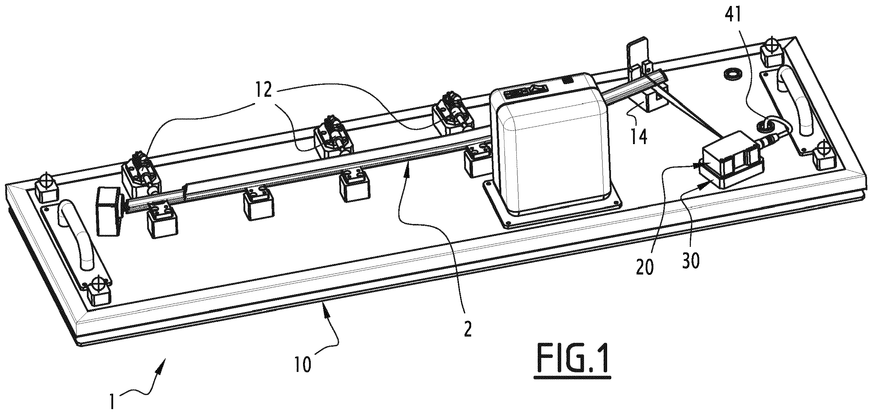

Sur les figures 1 à 4 est représenté un dispositif 1 permettant de contrôler les dimensions d'une pièce 2.

Dans l'exemple de réalisation considéré sur les figures, la pièce à contrôler 2 est un joint de forme allongée, typiquement un joint conçu pour équiper un ouvrant d'un véhicule automobile, tel qu'un joint contre lequel est pressée une vitre d'une portière d'une automobile. Bien entendu, cet exemple de réalisation de la pièce 2 n'est pas limitatif de la présente invention : au contraire, le dispositif 1 est prévu pour être mis en oeuvre sur n'importe quel type de pièce à contrôler, quel que soit la forme, le matériau, la destination d'usage ou encore le procédé d'obtention, relatifs à cette pièce à contrôler.

Le dispositif 1 comporte un support 10 conçu pour mettre en position et maintenir fixement en position la pièce 2 lors du contrôle dimensionnel de cette dernière. De manière connue en soi, et donc non détaillée ici, le support 10 a également pour fonction de former un référentiel permettant de repérer dans l'espace tout objet en position fixe sur le support, en particulier la pièce 2. Dans l'exemple de réalisation considéré sur les figures, ce support 10 se présente principalement sous la forme d'une plaque rigide, sur une des deux faces principales de laquelle est rapportée la pièce 2. Afin de fixer en position cette pièce sur la plaque précitée, le support 10 est muni de plusieurs organes de maintien 12 qui, dans l'exemple de réalisation considéré ici, consiste en des mécanismes à sauterelle, étant entendu que cette forme de réalisation n'est pas limitative, diverses formes de réalisation étant envisageables et disponibles dans la technique.

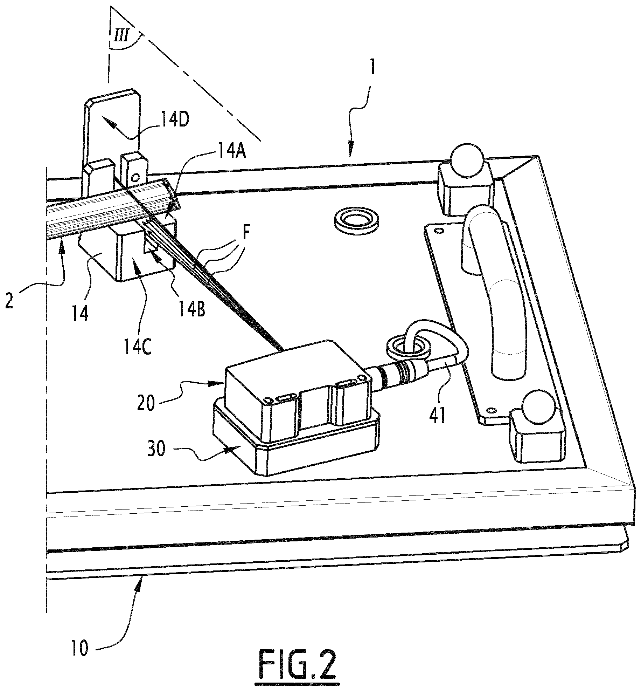

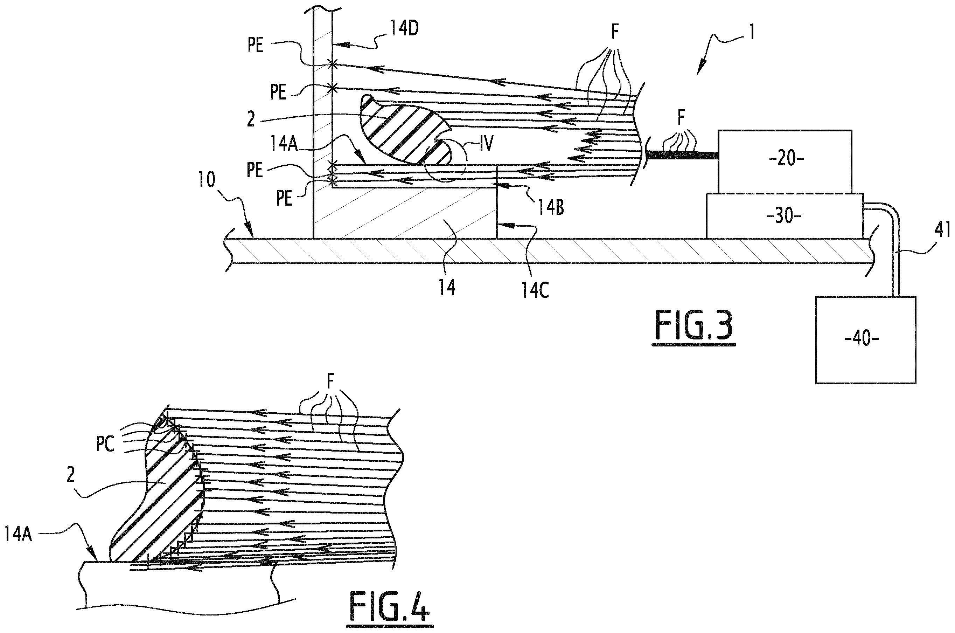

Pour des raisons qui apparaitront plus loin, le support 10 est également pourvu solidairement d'un bloc fixe 14 supportant une partie de la pièce 2. Plus précisément, ce bloc de support 14 délimite une surface 14A contre laquelle la pièce 2 repose en appui gravitaire lors de l'utilisation du dispositif 1, c'est-à-dire lors du contrôle de cette pièce par le dispositif 1. Cette surface d'appui 14A est creusée d'une fente 14B : comme bien visible sur les figures 2 et 3, lorsque la pièce 2 repose sur la surface d'appui 14A, la fente 14B court au-dessous de cette pièce 2, en reliant ainsi l'une à l'autre une des faces latérales du bloc de support 14, référencée 14C, et une surface 14D qui s'étend en saillie vers le haut depuis la surface d'appui 14A, et ce sensiblement à la perpendiculaire dans l'exemple de réalisation considéré ici.

Le dispositif de contrôle 1 comporte en outre un capteur laser multi-faisceaux 20. Ce capteur 20 est conçu pour émettre plusieurs faisceaux lumineux linéaires F, qui sont distincts les uns des autres et qui sont disposés dans un même plan géométrique : en pratique, ces faisceaux lumineux F sont, individuellement, identiques les uns aux autres et, conjointement, occupent une tranche de l'espace, qui est plane et dont l'épaisseur est égale au diamètre des faisceaux. Les faisceaux lumineux F sont ainsi émis depuis le capteur 20, avantageusement en formant une rangée dans le sens où ces faisceaux sont superposés les uns aux autres dans le plan géométrique précité, ces faisceaux étant sensiblement parallèles les uns aux autres, plus précisément très faiblement inclinés les uns par rapport aux autres, en provenant d'une source d'émission commune, appartenant au capteur 20, et en s'éloignant de cette dernière sensiblement dans une même direction.

Sur les figures 3 et 4, les faisceaux lumineux F émis par le capteur laser multi-faisceaux 20 sont schématisés par des flèches s'éloignant de ce capteur 20. On notera que le nombre de flèches dessinées n'est que symbolique, dans le sens où, en réalité, le nombre de faisceaux lumineux F est bien supérieur à celui des flèches dessinées sur les figures 3 et 4.

Le capteur laser multi-faisceaux 20 est rapporté fixement sur le support 10 par tout moyen de fixation approprié, étant entendu que, en pratique, ce capteur peut être amovible, par exemple à des fins de maintenance ou de repositionnement sur le support. Dans tous les cas, en service, le capteur 20 est en position fixe sur le support 10 de manière que les faisceaux lumineux F qu'il émet sont dirigés vers la pièce à contrôler 2, plus précisément vers une surface prédéterminée de cette dernière, dont l'utilisateur souhaite contrôler les dimensions. Dans l'exemple de réalisation considéré sur les figures, comme évoqué plus haut, cette surface à contrôler de la pièce 2 est délimitée par la partie de cette pièce, reposant sur le bloc de support 14, de sorte que le capteur 20 est agencé sur la plaque principale du support 10 de façon que le plan géométrique dans lequel ce capteur émet les faisceaux lumineux F s'étend perpendiculairement, à la fois, à la surface d'appui 14A et à la face 14C du bloc de support 14, en étant aligné avec la fente 14B, comme bien visible sur les figures 2 et 3. Bien entendu, cet agencement n'est pas limitatif de l'invention, du moment que, au sein du dispositif de contrôle 1, les faisceaux F, émis par le capteur laser multi-faisceaux 20, sont dirigés vers la surface à contrôler de la pièce 2 et intersectent cette surface. En particulier, comme on le comprendra des explications qui vont suivre, l'écartement entre le capteur 20 et la pièce 2 n'est pas préimposé sur le support 10, ce qui facilite la construction.

Lorsque le dispositif de contrôle 1 est en service, chacun des faisceaux lumineux F est, lorsqu'il rencontre un obstacle, réfléchi en direction de la source d'émission laser du capteur 20 : de manière connue en soi, à partir d'une mesure du temps mis par ce faisceau pour revenir jusqu'au capteur, il est possible de déterminer la distance entre le capteur et cet obstacle.

Ce principe étant rappelé, l'invention prévoit qu'au moins certains des faisceaux lumineux F émis par le capteur laser multi-faisceaux 20 intersectent la surface à contrôler de la pièce 2 en une pluralité de points de contrôle PC. Bien entendu, il y a autant de points de contrôle PC que de faisceaux F rencontrant la pièce 2. Dans la mesure où les faisceaux F sont agencés dans un même plan géométrique, les points de contrôle PC sont coplanaires, en étant situés dans le plan géométrique précité et en étant répartis, de manière sensiblement régulière, le long du profil de la pièce 2, formé par l'intersection entre la surface à contrôler de la pièce et le plan géométrique précité. Ce profil d'intersection de la pièce 2 est celui montré dans le plan de coupe des figures 3 et 4. Préférentiellement, la densité des points de contrôle PC, le long du profil précité, est élevée. Ainsi, plusieurs points de contrôle PC sont prévus par millimètre dans une direction à la fois perpendiculaire à la direction d'émission des faisceaux et appartenant au plan géométrique précité.

Les signaux électriques, qui sont générés par le capteur laser multi-faisceaux 20 et qui portent les informations relatives aux mesures du temps mis par chacun des faisceaux F, ayant rencontré un obstacle, pour revenir jusqu'au capteur, sont envoyés à une unité de traitement dédiée 30. Sur les figures, cette unité de traitement 30 est représentée adjacente au capteur laser multi-faisceaux 20, en partageant le même boîtier externe, étant entendu que d'autres formes de réalisation sont envisageables. Dans tous les cas, cette unité de traitement 30 comporte des composants électroniques, notamment un microprocesseur, qui traitent les signaux électriques générés par le capteur 20.

L'unité de traitement 30 est adaptée pour, à partir des signaux électriques générés par le capteur 20, fournir des données représentatives de la position des points de contrôle PC par rapport au support 10. A cet effet, suivant un mode de réalisation préférentiel, qui est montré sur les figures, l'unité de traitement 30 utilise des informations provenant du capteur laser multi-faisceaux 20, autres que les informations relatives aux points de contrôle PC, à savoir des informations relatives à des points d'étalonnage PE, qui sont coplanaires avec les points de contrôle PC et qui sont respectivement formés à l'intersection entre la surface 14D, définie plus haut, et certains des faisceaux F émis par le capteur 20, à savoir les faisceaux, autres que ceux intersectant la pièce 2, qui intersectent la surface précitée 14D. Ainsi, sur la figure 3, en dehors des faisceaux rencontrant la pièce 2, certains des faisceaux F passent au-dessous de cette pièce, à l'intérieur de la fente 14B, jusqu'à rencontrer la partie basse de la surface 14D, en y formant certains des points d'étalonnage PE, tandis que d'autres faisceaux F passent au-dessus de la pièce 2 pour, eux aussi, rencontrer la surface 14D, plus précisément la partie haute de cette surface, en y formant également des points d'étalonnage PE. Pour permettre à l'unité de traitement 30 de déduire la position des points de contrôle PC par rapport au support 10 à partir des informations relatives aux points d'étalonnage PE, on comprend que cette unité 30 a préalablement été renseignée sur la position précise de la surface précitée 14D, que l'on peut donc qualifier de surface d'étalonnage, par rapport au support 10. En pratique, une telle information préalable quant à la position précise de la surface d'étalonnage 14D peut être obtenue par tous moyens appropriés, par exemple à l'aide d'un comparateur à contact, et être fournie à l'unité 30.

En tenant compte de ce qui précède, on comprend que, conjointement, le capteur laser multi-faisceaux 20 et l'unité 30 de traitement des signaux générés par ce capteur forment des moyens permettant d'acquérir des données représentatives de la position, par rapport au support 10, de la surface à contrôler de la pièce 2, plus précisément de la pluralité de points de contrôle PC, et ce, avantageusement, sans nécessiter d'autre manipulation que d'installer la pièce 2 sur le support 10.

Le dispositif de contrôle 1 comporte en outre des moyens de calcul 40, typiquement des moyens informatiques, à même de calculer, à partir des données positionnelles fournies par l'unité 30 des moyens d'acquisition précités, un écart dimensionnel entre la surface à contrôler de la pièce 2, plus précisément le profil de cette surface dans le plan géométrique des faisceaux F, et une surface théorique prédéfinie dont les caractéristiques géométriques sont connues à l'avance des moyens de calcul 40. Plus précisément, les moyens 40 sont prévus pour calculer cet écart entre les points de contrôle PC et des points correspondants de la surface théorique précitée. Autrement dit, les moyens de calcul 40 fournissent un résultat de contrôle de la conformité dimensionnelle de la surface à contrôler de la pièce 2, le calcul de ces écarts étant, en tant que tel, connu, comme évoqué dans la partie introductive du présent document. Sur les figures, ces moyens de calcul 40 ne sont représentés qu'à la figure 3, uniquement de façon schématique, un câble de transmission de données 41 reliant l'unité de traitement 30 à ces moyens de calcul 40.

Les moyens de calcul 40 étant connus en eux-mêmes, ils ne seront pas décrits ici plus avant, étant cependant remarqué que, suivant une disposition préférentielle mais non obligatoire, ces moyens de calcul 40 sont également adaptés pour, à partir des données positionnelles fournies par l'unité de traitement 30, reconstituer, notamment par extrapolation, un profil continu de la surface à contrôler de la pièce 2 dans le plan géométrique des faisceaux F : de cette façon, on peut mettre à disposition de l'utilisateur un tracé continu de ce profil de la pièce 2, alors que, comme expliqué plus haut, seuls des points successifs du profil réel de cette pièce ont été mesurés à l'aide du capteur laser multi-faisceaux 20, à savoir les points de contrôle précités PC.

A titre d'option avantageuse, l'unité de traitement 30 est adaptée pour sélectionner une partie seulement des points de contrôle PC et en fournir aux moyens de calcul 40 les données représentatives de la position par rapport au support 10. En d'autres termes, cela revient à ce que l'unité de traitement 30 soit à même de segmenter les points de contrôle PC répartis sur le profil, dans le plan géométrique des faisceaux F, de la surface à contrôler de la pièce 2. De cette façon, plutôt que d'envoyer aux moyens de calcul 40 un ensemble de données positionnelles, dont une part non négligeable, voire substantielle, est inutile à l'utilisateur, une partie seulement de ces données est obtenue, par l'unité 30, par traitement des informations relatives aux points de contrôle PC intéressant effectivement l'utilisateur, avant que les données positionnelles correspondantes soient fournies aux moyens de calcul 40. En pratique, la sélection des points de contrôle PC intéressants est basée sur un choix de l'utilisateur, par exemple lié à une singularité de forme d'une portion déterminée du profil de la pièce 2.

Bien entendu, dans le prolongement des considérations présentées juste ci-dessus, il peut également être prévu, à titre optionnel, que les moyens de calcul 40 ne traitent qu'une partie seulement des données positionnelles que leur fournit l'unité 30, ce qui revient à dire que les moyens de calcul traitent alors seulement un groupe des points de contrôle PC. En d'autres termes, le dispositif de contrôle 1 est à même de réaliser un contrôle dimensionnel sur une portion seulement du profil précité de la pièce 2, par le biais d'un paramétrage correspondant au niveau de l'unité 30 et/ou bien par le biais d'une programmation correspondante des moyens de calcul 40.

Suivant une autre option avantageuse, qui peut d'ailleurs être cumulée ou non avec ce qui précède, l'unité de traitement 30 est adaptée pour comparer entre elles les données positionnelles qu'elle obtient à partir des signaux générés par le capteur laser multi-faisceaux 20. De cette façon, l'unité de traitement 30 est alors à même de déduire une ou plusieurs valeurs de comparaison entre ces données. En particulier, on peut alors accéder à un maximum et un minimum pour ces données positionnelles, c'est-à-dire aux données relatives, respectivement, au point de contrôle PC le plus proche, dans la direction d'émission, du capteur 20 et au point de contrôle PC le plus éloigné, toujours dans cette direction, du capteur 20. Autrement formulé, le long du profil de la surface à contrôler de la pièce 2 dans le plan géométrique des faisceaux F, cela revient à identifier le sommet le plus saillant et le creux le plus profond. Bien entendu, d'autres types de valeurs de comparaison peuvent être envisagés, par exemple un écart-type de la population des points de contrôle PC dont les données positionnelles correspondantes sont comparées entre elles par l'unité de traitement 30, notamment en fonction de l'intérêt de l'utilisateur.

Enfin, divers aménagements et variantes au dispositif de contrôle 1 décrit jusqu'ici sont par ailleurs envisageables. A titre d'exemples :
- le dispositif de contrôle 1 peut être pourvu de plusieurs capteurs laser multi-faisceaux, qui sont individuellement identiques au capteur 20 et qui sont agencés sur le support 10 de manière que leur groupe respectif de faisceaux lumineux rencontre la pièce 2 en autant de profils différents les uns des autres ; et/ou
- plutôt que de réaliser un contrôle uniquement dimensionnel d'une pièce, le dispositif 1 peut être utilisé pour réaliser un contrôle positionnel d'une pièce, comme évoqué dans la partie introductive du présent document.

## Revendications

1. Dispositif (1) de contrôle dimensionnel et/ou du positionnement d'une pièce (2), ce dispositif comportant :
- un support (10) de repérage spatial, de mise en position et de maintien en position fixe d'une pièce à contrôler (2),
- des moyens (20, 30) d'acquisition de données représentatives de la position d'une surface à contrôler de la pièce (2) par rapport au support (10), ces moyens d'acquisition étant adaptés pour interagir sans contact avec cette surface de la pièce, et
- des moyens de calcul (40) adaptés pour, à partir des données fournies par les moyens d'acquisition (20, 30), calculer un écart dimensionnel et/ou de positionnement entre la surface à contrôler de la pièce (2) et une surface théorique prédéfinie,
les moyens d'acquisition (20, 30) comprennent un capteur laser multi-faisceaux (20), qui est en position fixe sur le support (10) et qui émet plusieurs faisceaux lumineux distincts (F) dans un même plan géométrique, dont au moins certains intersectent la surface à contrôler de la pièce (2) en autant de points de contrôle (PC) coplanaires et sont réfléchis en direction du capteur laser multi-faisceaux au niveau duquel le temps mis par lesdits au moins certains faisceaux pour revenir jusqu'au capteur laser multi-faisceaux est mesuré, les moyens d'acquisition (20, 30) sont adaptés pour fournir des données représentatives de la position des points de contrôle (PC) par rapport au support (10), à partir desquelles les moyens de calcul (40) sont adaptés pour calculer l'écart dimensionnel et/ou de positionnement entre au moins certains de ces points de contrôle de la surface à contrôler de la pièce (2) et des points correspondants de la surface théorique prédéfinie, **caractérisé en ce que** le support (10) est pourvu fixement d'une surface d'étalonnage (14D) dont la position par rapport au support est connue par les moyens d'acquisition (20, 30),
**en ce que**, parmi les faisceaux (F) émis par le capteur laser multi-faisceaux (20) dans ledit plan géométrique, certains intersectent la surface d'étalonnage (14D) en autant de points d'étalonnage (PE) qui sont coplanaires avec les points de contrôle (PC), et
**en ce que** les moyens d'acquisition (20, 30) sont adaptés pour déduire les données représentatives de la position des points de contrôle (PC) par rapport au support (10) à partir des informations relatives aux points d'étalonnage (PE).

2. Dispositif suivant la revendication 1, **caractérisé en ce que** l'écartement entre le capteur laser multi-faisceaux (20) et la pièce (2) n'est pas préimposé sur le support (10).

3. Dispositif suivant l'une des revendications 1 ou 2, **caractérisé en ce que** le capteur laser multi-faisceaux (20) émet une rangée de faisceaux lumineux distincts (F).

4. Dispositif suivant l'une quelconque des revendications précédentes, **caractérisé en ce que** les moyens d'acquisition (20, 30) sont adaptés pour sélectionner une partie seulement des points de contrôle (PC) et en fournir aux moyens de calcul (40) les données représentatives de la position par rapport au support (10).

5. Dispositif suivant l'une quelconque des revendications précédentes, **caractérisé en ce que** les moyens d'acquisition (20, 30) sont adaptés pour comparer entre elles tout ou partie des données représentatives de la position des points de contrôle (PC) et pour en déduire au moins une valeur de comparaison, telle qu'un maximum, un minimum ou un écart-type.

6. Dispositif suivant l'une quelconque des revendications précédentes, **caractérisé par** plusieurs capteurs laser multi-faisceaux (20), dont les plans géométriques respectifs de leurs faisceaux lumineux sont différents les uns des autres.

7. Dispositif suivant l'une quelconque des revendications précédentes, **caractérisé en ce que** les moyens de calcul (40) sont également adaptés pour, à partir des données fournies par les moyens d'acquisition (20, 30), reconstituer un profil continu de la surface à contrôler de la pièce (2) dans ledit plan géométrique.

8. Dispositif suivant l'une quelconque des revendications précédentes, **caractérisé en ce que** les moyens d'acquisition (20, 30) comportent une unité de traitement adaptée pour fournir les données représentatives de la position des points de contrôle (PC) à partir de signaux électriques, générés par le capteur laser multi-faisceaux (20) et portant les informations relatives aux mesures de temps mis par chacun desdits au moins certains faisceaux (F) pour revenir au capteur laser multi-faisceaux (20).

## Patentansprüche

1. Vorrichtung (1) zur Überwachung der Abmessung und/oder der Positionierung eines Werkstücks (2), wobei diese Vorrichtung aufweist:
- eine Halterung (10) der räumlichen Vermessung, der Positionierung und des Haltens in fester Position eines zu überprüfenden Werkstücks (2),
- Mittel (20, 30) zum Beschaffen von Daten, die repräsentativ für die Position einer zu überprüfenden Fläche des Werkstücks (2) in Bezug auf die Halterung sind, wobei diese Beschaffungsmittel geeignet sind, kontaktlos mit dieser Fläche des Werkstücks zu interagieren, und
- Berechnungsmittel (40), die geeignet sind, aus den von den Beschaffungsmitteln (20, 30) gelieferten Daten eine Abweichung der Abmessungen und/oder der Positionierung zwischen der zu überprüfenden Fläche des Werkstücks (2) und einer vorbestimmten theoretischen Fläche zu berechnen,
wobei die Beschaffungsmittel (20, 30) einen Mehrstrahllasersensor (20) umfassen, der in einer festen Stellung an der Halterung (10) liegt und der mehrere unterschiedliche Lichtbündel (F) in einer selben geometrische Ebene aussendet, von denen mindestens einige die zu überprüfende Fläche des Werkstücks (2) an ebenso vielen koplanaren Überprüfungspunkten (PC) schneiden und in Richtung des Mehrstrahllasersensors reflektiert werden, an dem die Zeit, die mindestens einigen Bündel benötigen, um zu dem Mehrstrahllasersensor zurückzukehren, gemessen wird, wobei die Beschaffungsmittel (20, 30) geeignet sind, Daten zu liefern, die repräsentativ für die Position der Überprüfungspunkte (PC) in Bezug auf die Halterung (10) sind, wobei die Berechnungsmittel (40) geeignet sind, aus diesen die Abweichung bezüglich der Abmessungen und/oder der Positionierung zwischen mindestens einigen dieser Überprüfungspunkte der zu überprüfenden Fläche des Werkstücks (2) und korrespondierenden Punkten der vorbestimmten theoretischen Fläche zu berechnen,
**dadurch gekennzeichnet, dass** die Halterung (10) fest mit einer Kalibrierfläche (14D) versehen ist, deren Position in Bezug auf die Halterung durch die Beschaffungsmittel (20, 30) bekannt ist,
dass von den von dem Mehrstrahlsensor (20) in der geometrischen Ebene emittierten Lichtbündeln einige die Kalibrierfläche (14D) an ebenso vielen Kalibrierpunkten (PE) schneiden, die koplanar mit den Überprüfungspunkten (PC) sind, und
dass die Beschaffungsmittel (20, 30) geeignet sind, aus den Informationen, die die Kalibrierpunkte (PE) betreffen, die Daten herzuleiten, die repräsentativ für die Position der Überprüfungspunkte (PC) in Bezug auf die Halterung (10) sind.

2. Vorrichtung nach Anspruch 1, **dadurch gekennzeichnet, dass** der Abstand zwischen dem Mehrstrahllasersensor (20) und dem Werkstück (2) nicht der Halterung (10) aufgezwungen ist.

3. Vorrichtung nach einem der Ansprüche 1 oder 2, **dadurch gekennzeichnet, dass** der Mehrstrahllasersensor (20) eine Serie von unterschiedlichen Lichtbündeln (F) emittiert.

4. Vorrichtung nach einem beliebigen der vorhergehenden Ansprüche, **dadurch gekennzeichnet, dass** die Beschaffungsmittel (20, 30) geeignet sind, nur einen Teil der Überprüfungspunkte (PC) auszuwählen und davon den Berechnungsmitteln (40) die Daten zu liefern, die für die Position in Bezug auf die Halterung (10) repräsentativ sind.

5. Vorrichtung nach einem beliebigen der vorhergehenden Ansprüche, **dadurch gekennzeichnet, dass** die Beschaffungsmittel (20), 30) geeignet sind, die für die Position der Überprüfungspunkte (PC) repräsentativen Daten insgesamt oder teilweise untereinander zu vergleichen und daraus mindestens einen Vergleichswert, wie ein Maximum, ein Minimum oder eine Standardabweichung herzuleiten.

6. Vorrichtung nach einem beliebigen der vorhergehenden Ansprüche, **gekennzeichnet durch** mehrere Mehrstrahllasersensoren (20), deren jeweilige geometrische Ebenen ihrer Lichtbündel unterschiedlich zueinander sind.

7. Vorrichtung nach einem beliebigen der vorhergehenden Ansprüche, **dadurch gekennzeichnet, dass** die Berechnungsmittel (40) auch geeignet sind, aus den von den Beschaffungsmitteln (20, 30) gelieferten Daten ein kontinuierliches Profil der zu überprüfenden Fläche des Werkstücks (2) in der geometrischen Ebene zu rekonstruieren.

8. Vorrichtung nach einem beliebigen der vorhergehenden Ansprüche, **dadurch gekennzeichnet, dass** die Beschaffungsmittel (20, 30) eine Verarbeitungseinheit aufweisen, die geeignet ist, repräsentative Daten der Position der Überprüfungspunkte (PC) aus elektrischen Signalen zu liefern, die von dem Mehrstrahllasersensor (20) erzeugt werden und die die Informationen bezüglich der Messungen der Zeit, die von jedem der mindestens einigen Bündel (4) benötigt wird, um zu dem Mehrstrahllasersensor (20) zurückzukehren, tragen.

## Claims

1. Device (1) for checking the size and/or positioning of a part (2), the device comprising:
- a support (10) for spatially locating, positioning and keeping in a fixed position a part (2) to be checked,
- means (20, 30) for acquiring data representing the position of a surface to be checked of the part (2) relative to the support (10), the acquisition means being adapted to interact contactlessly with the surface of the part, and
- computing means (40) adapted to calculate, on the basis of the data provided by the acquisition means (20, 30), a difference in size and/or positioning between the surface to be checked of the part (2) and a predefined theoretical surface,
the acquisition means (20, 30) comprise a multi-beam laser sensor (20) which is in a fixed position on the support (10) and which emits a plurality of distinct light beams (F) in the same geometric plane, at least some of which beams intersect the surface to be checked of the part (2) at as many coplanar check points (PC) as there are beams and are reflected in the direction towards the multi-beam laser sensor, at which the time taken by said at least some beams to return to the multi-beam laser sensor is measured,
the acquisition means (20, 30) are adapted to provide data representing the position of the check points (PC) relative to the support (10), on the basis of which data the computing means (40) are adapted to calculate the difference in size and/or positioning between at least some of the check points of the surface to be checked of the part (2) and corresponding points of the predefined theoretical surface, **characterised in that** the support (10) is provided fixedly with a calibration surface (14D), the position of which relative to the support is known by the acquisition means (20, 30),
**in that**, of the beams (F) emitted by the multi-beam laser sensor (20) in said geometric plane, some intersect the calibration surface (14D) at as many calibration points (PE) which are coplanar with the check points (PC) as there are beams, and **in that** the acquisition means (20, 30) are adapted to derive the data representing the position of the check points (PC) relative to the support (10) from information relating to the calibration points (PE).

2. Device according to claim 1, **characterised in that** the spacing between the multi-beam laser sensor (20) and the part (2) is not pre-imposed on the support (10).

3. Device according to either claim 1 or claim 2, **characterised in that** the multi-beam laser sensor (20) emits a row of distinct light beams (F).

4. Device according to any one of the preceding claims, **characterised in that** the acquisition means (20, 30) are adapted to select only some of the check points (PC) and to provide the computing means (40) with the data thereof representing the position relative to the support (10).

5. Device according to any one of the preceding claims, **characterised in that** the acquisition means (20, 30) are adapted to compare all or some of the data representing the position of the check points (PC) and to derive therefrom at least one comparison value, such as a maximum, a minimum or a standard deviation.

6. Device according to any one of the preceding claims, **characterised by** a plurality of multi-beam laser sensors (20), of which the respective geometric planes of their light beams are different from one another.

7. Device according to any one of the preceding claims, **characterised in that** the computing means (40) are also adapted, on the basis of the data provided by the acquisition means (20, 30), to reconstruct a continuous profile of the surface to be checked of the part (2) in said geometric plane.

8. Device according to any one of the preceding claims, **characterised in that** the acquisition means (20, 30) have a processing unit adapted to provide the data representing the position of the check points (PC) on the basis of electrical signals generated by the multi-beam laser sensor (20) and carrying the information relating to the measurements of the time taken by each of said at least some beams (F) to return to the multi-beam laser sensor (20).
